# EUROPEAN PATENT APPLICATION

(11) **EP 4 446 844 A1**
(43) Date of publication of application: **16.10.2024**
(21) Application number: 24464002.5
(22) Date of filing: 05.04.2024
(51) Int. Cl.: G05D 1/224, G05D 1/698, G05D 101/15, G05D 105/85, G05D 109/25

(54) **AUTONOMOUS SYSTEM AND METHOD FOR RECOGNITION AND SUPPORT**

(30) Priority: 13.04.2023 RO 202300188
(71) Applicant: Stefan cel Mare University of Suceava, 720229 Suceava, County Suceava (RO)
(72) Inventor: Milici, Dan Laurentiu, Suceava (RO); Danubianu, Mirela, Suceava (RO); Gherman, Ovidiu Ionut, Suceava (RO); Gradinaru, Bogdanel Constantin, Suceava (RO); Siean, Alexandru-Ionut, Suceava (RO); Tironeac, Gabriel, Suceava (RO); Petrariu, Irina, Suceava (RO); Patraucean, Alexandru Gheorghe, Bivolaria, Suceava (RO)

(57) **Abstract**

Autonomous system and method for recognition and support, according to the invention, involves a *Central Command System* capable of generating a mission plan for a swarm of drones, designed on the basis of real situations obtained following previous missions or following the generation of real situations through a self-learning mechanism, central system that can structure a three-dimensional environment for virtual reality glasses, based on information obtained from one or more *Drone swarm control devices,* device that processes and coordinates information from a simulator or from a *Drone Swarm,* composed of any number of drone-type devices.

## Description

The invention refers to an autonomous system and method for recognition and support, used for the surveillance and recognition of crisis situations in an extended space, intended for the analysis and/or identification of critical situations related to public safety, transport, environmental quality, infrastructure, etc., so that the phenomenon is identified and instrumented by means of a swarm of drones to collect data, process the information derived from them and continuously optimize the configuration of the drone system to increase the accuracy of the information obtained.

In order to monitor and recognize crisis situations using a swarm of drones, a solution is known (WO/2022/261678 - Systems and methods for configuring a swarm of drones), which mainly consists of a central command system that can determine a mission plan for the cooperative execution of the component elements based on one or more sensors required to access data in accordance with the mission plan, the mission plan may be transmitted to a remote drone swarm controller, so that it determines a swarm configuration based on the mission plan and available drones and the system controller can transmit instructions on the swarm configuration to form an optimal configuration, while the drones can be monitored by other drones in swarm, by the drone swarm controller and/or the central command system, providing options to avoid errors and mistakes for one or more drones.

The disadvantages of the described solution consist in the fact that the drone swarm control device uses an initially imposed strategy that does not change depending on the mission performed, the characteristics of the drones used or the configuration of the environment, and the results obtained from the analyzes cannot be used later in increasing the performance of future missions or for training emergency responders using VR (virtual reality) systems.

The invention mainly solves the technical problem in that the autonomous system and method for recognition and support uses algorithms to simulate various real situations and artificial intelligence algorithms to optimize subsequent mission plans and allows the generation of a three-dimensional virtual reality environment accessible to a human operator who can intervene in mission reconfiguration or to practice human intervention plans in critical cases.

Autonomous system and method for recognition and support, according to the invention, removes the disadvantages and problems presented in that it mainly requires that the control device of the drone swarm and the central command system contain structures with algorithms for simulating various real situations and artificial intelligence algorithms capable of continuous learning to optimize subsequent mission plans and the central command system allows the structuring of images obtained from the swarm of drones to generate a three-dimensional virtual reality environment accessible to a human operator to supervise / coordinate and to identify gravity the situation in early cases and/or to train human operators for possible future missions.

The invention presents the following advantages:
- The system introduces possibilities for continuous optimization of mission plans through self-learning (adaptability);
- The system adapts the swarm of drones used, autonomously or by means of a human operator, depending on the mission imposed and the characteristics of the drones used (reusability);
- The system can be integrated into the structure of some departments of supervision and intervention in case of crisis without requiring IT specialists for its operation;
- The system allows for supervision/coordination by means of human operators using 3D glasses for virtual reality;
- The system allows the training of human operators for possible future missions using 3D glasses for virtual reality (interoperability).

An example of an embodiment of the invention is given below in connection with the figures:

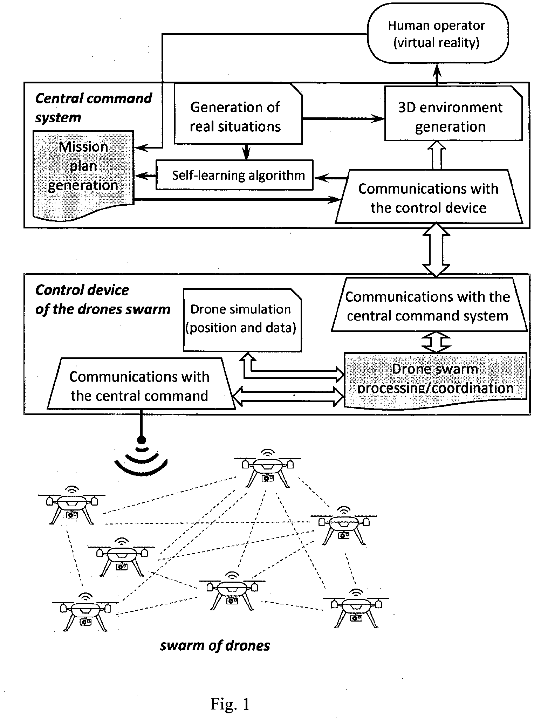

- Fig. 1 - Autonomous system and method for recognition and support - general block structure;
- Fig. 2 - Autonomous system and method for recognition and support - architecture of the recognition and support method.

Autonomous system and method for recognition and support, is mainly characterized by the fact that it consists of a *Central Command System* capable of generating a mission plan for a swarm of drones, with the aim of analyzing and/or identifying critical situations related to public safety, transport, environmental quality, infrastructure, etc., mission plan designed on the basis of real situations obtained following previous missions or following the generation of real situations through a self-learning mechanism, central system that can structure an environment three-dimensional virtual reality glasses based on information obtained from one or more *Drone Swarm Control Device,* device that processes and coordinates information from a simulator or a *Drone Swarm,* composed of some number of drone-like devices, not necessarily similar, capable of taking in information about the environment flown over, their position in time and space, and the position of nearby drones, and exchanging information with nearby drones.

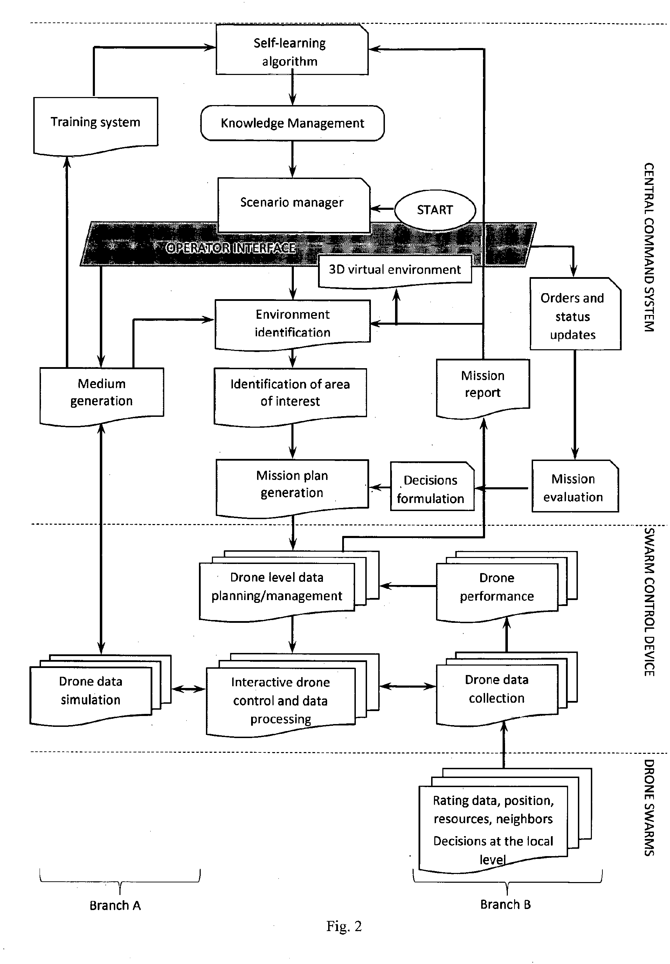

Autonomous system and method for reconnaissance and support (Figure 2) which, based on a method, allows the generation of various real environmental situations and the generation of data about hardware resources, position and data, similar to those from drones, for the generation of scenarios (branch A) or based on real data transmitted by drones on mission (branch B) and applied to a self-learning algorithm based on machine learning techniques to improve a scenario manager based on knowledge management, and which leads to the generation of mission plans that form the basis of a mission by identifying the environment and areas of interest, which plan is transmitted to a planning and data management algorithm at the drone level and which, together with the interactive control algorithm and drone data processing , depending on the technical characteristics of each drone uses, calculates/adjusts the trajectory, controls communications and positions each drone to obtain a maximum of the necessary information by designing the trajectory, securing the data and managing the space policy, including coordinating the structure of the drone swarm by replacing some drones that are unable to cope with the mission or can no longer be controlled, taking the data from the drones and using them for mission optimization and generating a mission report and a three-dimensional virtual environment that can be viewed by human operators through augmented reality glasses virtual for additional data collection, surveillance or training (eg. firefighting operations), each drone in the swarm being equipped with sensors corresponding to the mission and to evaluate its own position and resources, able to move according to the information received with the avoidance of obstacles, to take data from the environment, information about its own resources and position itself in time and space as well as information about the position of drones in its vicinity and exchange information with the drone swarm controller by taking positioning commands and transmitting the collected information.

Autonomous system and method for recognition and support, according to the invention, can be reproduced with the same performance and characteristics whenever necessary, for any application compatible with it or parts thereof, a fact that constitutes an argument in favor of meeting the criterion of industrial applicability .

## Claims

1. Autonomous system and method for reconnaissance and support, **characterized in that** it consists of a *Central Command System* capable of generating a mission plan for a swarm of drones, with the aim of analyzing and/or identifying critical situations related to safety public, transport, environmental quality, infrastructure, etc., mission plan designed on the basis of real situations obtained following previous missions or following the generation of real situations through a self-learning mechanism, central system that can structure a three-dimensional environment for virtual reality glasses, based on information obtained from one or more *Drone Swarm Control Devices,* a device that processes and coordinates information from a simulator or a *Drone Swarm,* composed of any number of devices drone type, not necessarily similar, capable of receiving information about the environment flown over, about their position in time and space and about the position of nearby drones and exchanging information with nearby drones and and exchanging information with nearby drones and the device drone swarm control.

2. Autonomous system and method for recognition and support (Figure 2) which, based on a method, allows the simulation of various real environmental situations and the generation of data about hardware resources, position and data, similar to those from drones, for the generation of scenarios (branch A) or based on real data transmitted by drones on mission (branch B) and applied to a self-learning algorithm based on artificial intelligence techniques to improve a scenario manager based on knowledge management, and which leads to the generation of mission plans that form the basis of a mission by identifying the environment and areas of interest, the plan transmitted to a planning and data management algorithm at the drone level and which, together with the interactive control algorithm and drone data processing, controls communications and positions each drone to obtain the maximum information needed through trajectory design, data security and space policy management, taking data from the drones and using it for mission optimization and generating a mission report and a three-dimensional virtual environment that can be viewed by human operators via virtual reality glasses for additional data collection, surveillance or training.
